# EUROPEAN PATENT APPLICATION

(11) **EP 4 686 843 A1**
(43) Date of publication of application: **04.02.2026**
(21) Application number: 24192011.5
(22) Date of filing: 31.07.2024
(51) Int. Cl.: F16C 17/04, F01D 25/16, F16C 33/10

(54) **THRUST BEARING FOR A BEARING SYSTEM AND INTEGRATED BEARING SYSTEM FOR A TURBOCHARGER, AND TURBOCHARGER**

(71) Applicant: Garrett Transportation I Inc., Torrance, CA 90504 (US)
(72) Inventor: Castan, Joel, 88150 Thaon-Les-Vosges (FR); Genin, Emeric, 88150 Thaon-Les-Vosges (FR)
(74) Representative: Adares PartGmbB

(57) **Abstract**

Thrust bearing for a bearing system of a turbocharger, to an integrated bearing system, and to a turbocharger comprising such a thrust bearing. The thrust bearing (1) comprises an axial bore (2) designed to receive a shaft extending between a compressor wheel and a turbine wheel, and a bearing surface (3) extending in a plane substantially perpendicular to the axial bore (2) from an inner diameter (31) to an outer diameter (32) of the surface (3). The surface (3) has multiple radial grooves (4), each extending from the inner diameter (31) outward in a radial direction towards the outer diameter (32) to a groove end (41) and being designed to supply lubrication oil to the surface (3), wherein the radial grooves (4) each extend for a fraction of more than 50% of the radial distance from the inner diameter (31) to the outer diameter (32) along the surface (3).

## Description

The invention relates to the field of bearings for turbochargers. More particularly, the invention relates to a thrust bearing for a bearing system of a turbocharger.

Turbochargers are essential components in modern internal combustion engines, designed to increase the efficiency and power output by forcing extra air into the combustion chamber. They are widely used in automotive, marine, and industrial applications, where enhanced engine performance is a critical requirement.

At the heart of a turbocharger lies the bearing system, which is crucial for the smooth and efficient operation of the turbocharger. The bearing system supports the turbocharger shaft, allowing it to rotate at extremely high speeds with minimal friction. The shaft connects the compressor wheel and the turbine wheel. The bearing system typically includes radial bearings for supporting radial loads and thrust bearings for handling axial loads.

The thrust bearing, specifically, plays a vital role in maintaining the axial position of the turbocharger shaft. In a turbocharger, the thrust bearing supports the axial loads generated by the exhaust gases on the turbine and the air on the compressor. These loads can be substantial, given the high-speed rotation and the dynamic forces involved. An oil-based thrust bearing is commonly employed, leveraging a thin film of lubricant to minimize friction and wear while supporting the axial load.

A bearing system for turbochargers is described for example in EP 1 002 185 B1, which discloses a single piece bearing having a cylindrical shape and integral thrust bearing surfaces on its opposite ends. The two annular bearing surfaces support the axial thrust of the compressor wheel and the turbine wheel, respectively. Each bearing surface comprises eight radial grooves, each extending from an internal bore of the bearing to the external diameter. The radial grooves are connected to axial grooves extending axially along the wall of the internal bore, such that lubrication oil is transported first along the axial grooves and then along the radial grooves to be distributed over and lubricate the bearing surface.

Because the radial grooves extend all the way to the outer diameter of the bearing, only a portion of the lubrication oil entering the radial grooves from the internal bore will be distributed over the bearing surface and lubricate the thrust bearing. A significant portion of the lubrication oil will flow through the radial grooves all the way to the outer diameter. A large amount of oil will have to be supplied through the axial grooves to the radial grooves to replenish the lost lubricant.

One way to reduce the amount of lubrication oil that needs to be replenished is by reducing the number of radial grooves. However, this would also reduce the amount of lubricant oil being supplied to the bearing surface. The problem would remain, in that the same portion of the lubricant oil will be lost at the outer diameter opening of the radial grooves. Another solution could be to shorten the length of the radial grooves such that they do not extend all the way to the outer diameter of the bearing surface, thus forcing all of the lubricant oil to exit the radial grooves into the bearing surface. However, such thrust bearings can be damaged by possible contamination contained in the supplied lubricant oil: If a particle contained in the oil is larger than the gap between the bearing surface and its counterpart surface, the particle's exiting a radial groove and entering the gap can cause damage to the bearing surface, which would lead to a reduction of bearing capacity.

It is an objective of the present invention to provide for a more damage resistant thrust bearing that would allow for a more reliable bearing system.

This objective is being met according to the present invention by providing a thrust bearing with the features according to claims 1, an integrated bearing system with the features according to claim 8, and a turbocharger with the features according to claim 9.

According to a first aspect of the invention, there is thus provided a thrust bearing for a bearing system of a turbocharger. The thrust bearing comprises an axial bore designed to receive a shaft extending from a compressor wheel to a turbine wheel, and a bearing surface extending in a plane substantially perpendicular to the axial bore. The bearing surface, which herein may in times be called "surface" for short, extends from an inner diameter to an outer diameter of the surface, and has in particular a ring shape or an annulus shape. Together with a counterpart surface that covers the bearing surface and is fixed to the shaft, and lubrication oil that is flowing between the bearing surface and the counterpart surface, a fluid bearing is formed. The inner diameter may have a diameter of between 4 mm to 10 mm, in particular around 8.6 mm. The outer diameter may have a diameter of between 10 mm to 20 mm, in particular around 16 mm.

As will be explained further below, the surface may comprise flat regions, which are flat, i.e. have a constant height, along an angular direction around the inner diameter. Such flat regions may concentrate the lubrication oil and thus form the actual load bearing areas. Thus, the size of the flat regions, which are called flat pads, will determine the bearing capacity or thrust capacity of the fluid bearing. Increasing the surface area of the flat pads will lead to a proportionally higher bearing capacity. However, a particle that may be contained as pollution in the oil, entering the gap between the surface and the counterpart surface, may cause a scratch on the surface, in particular in the flat pad regions, leading to a drop in bearing capacity. The inventors have uncovered that the bearing capacity depends in large part on the size of the contiguous areas, i.e. undivided areas, of the flat pads. A scratch along the surface may divide or dissect each flat pad and thus lead to a large drop in bearing capacity.

The surface has multiple radial grooves, each extending from the inner diameter in a radial direction outward towards the outer diameter, terminating in a groove end. Each radial groove is designed to supply the lubrication oil to the bearing surface and in particular ultimately to the flat pads. A pollution particle will generally travel through one of the radial grooves and enter the bearing surface at the groove end. The invention is based on the idea of allowing the particle to enter the surface beyond the halfway point of the flat pads before it spirals out of the oil gap, thus allowing a larger contiguous area of each flat pad to stay intact and contribute to the bearing capacity. Therefore, according to the invention, the radial grooves each extend for a fraction of more than 50% of the radial distance from the inner diameter to the outer diameter along the surface.

Advantageously, the radial grooves each extend for a fraction of more than 60%, 75%, 80%, 90%, or 95% of the radial distance from the inner diameter to the outer diameter along the surface. The further the groove end is from the inner diameter, the further towards the outer diameter a potential pollution particle will be pushed inside the radial groove before entering the oil gap between the surface and the counterpart surface. This will lead to yet a larger area of the flat pad to stay contiguous, thus further limiting the potential drop in bearing capacity. The optimal length of the radial groove, i.e. the optimal radial position of the groove end, may depend on other factors, such as the viscosity of the oil and the manner it spreads along the bearing surface. One may speak of a diameter of the radial grooves, which is twice the distance of a groove end from an axis of the thrust bearing, which is located at the center of the axial bore or inner diameter. The diameter may in particular be between 12 mm and 16 mm, advantageously at approximately 15 mm.

The number of radial grooves may vary depending on different structural or operational parameters, such as viscosity of the oil, the size of the gap, the surface area of the bearing surface and/or the flat pads etc. Having four radial grooves may allow for a very efficient device. In other advantageous embodiments, the surface has between three and nine radial grooves. More advantageously, there might be between four and eight grooves. Generally, five or six radial grooves may be of advantage.

Advantageously, the radial grooves are distributed substantially equidistantly along the circumference of the inner diameter. Preferably, pairs of radial grooves are positioned symmetrically on either side of the axis of the thrust bearing, such that a straight line connecting the groove ends of this pair of radial grooves crosses the axis of the thrust bearing, which is located at the center of the axial bore.

The number of radial grooves may be different than the number of axial grooves. Furthermore, a radial groove may be displaced along the angular direction at the inner diameter with respect to a corresponding axial groove. However, according to a practical embodiment, some or all of the radial grooves may each be aligned at the inner diameter with a corresponding axial groove. The axial groove may extend axially along an inner surface of the axial bore and be in communication with a lubrication oil channel entering the axial bore from the side. This way, lubrication oil may enter the axial bore through the oil channel and flow along the axial groove(s) and into the radial grooves, to then be distributed onto the bearing surface.

Advantageously, the surface is circumferentially profiled. This means that the surface height, measured along the axis, varies along the angular direction around the inner diameter. In particular, the surface comprises a flat pad associated with each radial groove and a ramp region rising circumferentially from the radial groove to its associated upper flat pad. In other words, when viewed from the perspective of the oil exiting the radial groove and entering the gap between the surface and the counterpart surface, the surface rises along the ramp region towards the flat pad and is then flat along the flat pad. As the counterpart surface is usually flat, this will lead to the oil being increasingly compressed along the ramp region and having a higher pressure at the flat pad.

Preferably, each radial groove is incorporated in a lower region of the surface circumferentially substantially adjacent to a neighboring flat pad. This neighboring flat pad is, in the wording of the previous paragraph, associated with a further radial groove preceding the neighboring flat pad along the angular direction. The oil spilling over the radial groove and flooding the surface will thus first cover the lower region and then be pushed along the ramp region towards the flat pad.

While it may be advantageous that each radial groove has an unchanging cross-section along the length of the radial groove, in a preferred embodiment, each radial groove has a groove depth from the surface that decreases along the radial direction from the inner diameter to the groove end. In other words, the radial groove is tapered and becomes shallower towards the groove end. This may allow for an easier manufacturing. However, it may have the additional advantage that less of the oil is introduced onto the surface near the groove end than at the inner diameter.

According to a further aspect of the invention, an integrated bearing system for a turbocharger is proposed, comprising a housing with a bearing case, in which a thrust bearing according to one of the herein described embodiments is placed. In yet another aspect of the invention a turbocharger is proposed, which comprises a compressor, a turbine and an integrated bearing system, which has a thrust bearing according to one of the herein described embodiments. The turbocharger further comprises a shaft, which extends between the compressor wheel and the turbine wheel and is placed inside the axial bore of the thrust bearing.

Some examples of embodiments of the present invention will be explained in more detail in the following description with reference to the accompanying schematic drawings, wherein:
- Fig. 1: shows a thrust bearing according to a preferred embodiment;
- Fig. 2: shows an expanded view on a section of a bearing surface of the thrust bearing shown in Fig. 1;
- Fig. 3: shows an expanded view on a section of a bearing surface of a thrust bearing according to a further preferred embodiment; and
- Fig. 4: shows a chart indicating relative capacities of various thrust bearings.

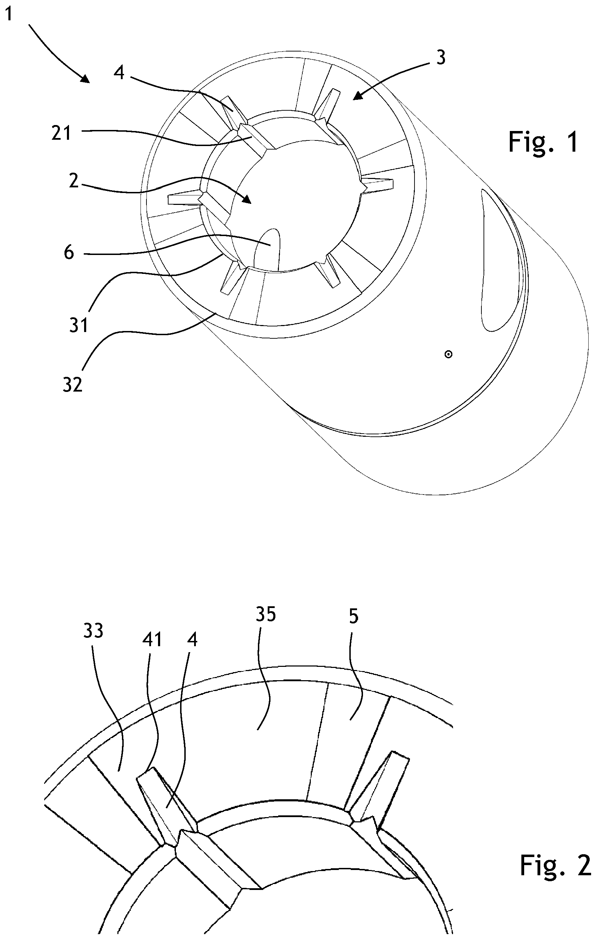

Fig. 1 shows a drawing of a perspective view of a single piece thrust bearing 1 having a cylindrical shape and integral thrust bearing surfaces on its opposite ends. One bearing surface 3 is visible in Fig. 1. The shown surface 3 may be the surface directed toward the compressor wheel or the surface directed toward the turbine wheel (neither of these wheels is shown in Fig. 1) of a turbocharger. The bearing 1 has an axial bore 2 through its center, forming an inner diameter 31 of the surface 3. The surface 3 has thus the shape of a ring, or mathematically speaking an annulus, and extends from the inner diameter 31 to an outer diameter 32.

Fig. 2 is a detailed view on a part of the surface 3. Along the angular direction around the inner diameter 31, the surface 3 is made up of six segments, each containing a lower region 33, a radial groove 4 carved into the lower region 33, a ramp region 35 and an upper flat pad 5. This pattern is followed by the next section, which is patterned substantially identically to the previous section. In particular, the lower region 33 is followed by the ramp region 35 and then the flat pad 5 in the relative direction of rotation of the compressor wheel or turbine wheel with respect to the bearing surfaces 3. Each radial groove 4 terminates in a groove end 41 distal to the inner diameter 31.

As can be seen in Figs. 1 and 2, the thrust bearing 1 comprises a lubrication oil channel 6 leading to the axial bore 2. Furthermore, there are axial grooves 21 inside inner walls of the axial bore 2, which are aligned with corresponding ones of the radial grooves 4. In operation, lubrication oil (not shown here) will enter the axial bore 2 through the lubrication oil channel 6, flow along the axial grooves 21 onto the radial grooves 4, and from there spread onto the surface 3.

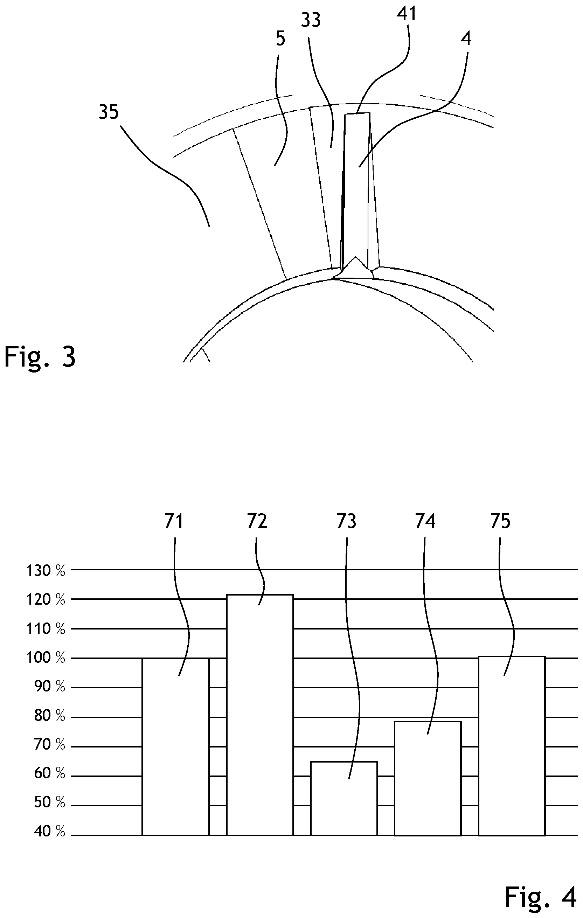

The radial grooves 4 in the embodiment shown in Figs. 1 and 2 extend to approximately 62% of the distance between the inner diameter 31 and the outer diameter 32 of the surface 3. A detailed view onto a section of the surface 3 of an embodiment having much longer radial grooves 4 is shown in Fig. 3. In this drawing, the length of the radial groove 4 is shown to be approximately 94% of the distance between the inner diameter 31 and outer the diameter 32.

The effect of the increased length of the radial grooves is shown in Fig. 4, which shows a chart indicating relative capacities of various thrust bearings, each represented by a bar 71, 72, 73, 74, 75, that shows a relative bearing capacity. The chart is a result of a number of computer simulations. In all cases, the inner diameter is assumed to be 8.6 mm and the outer diameter to be 16 mm, such that the distance between the inner diameter and the outer diameter is 3.7 mm.

The base setup 71 is the reference with a thrust capacity of 100%. It has a bearing surface without any scratches, i.e. its flat pads are intact. The second bar 72 relates also to an undamaged bearing surface, but with larger flat pads, leading to a 20% increase of the thrust capacity. The subsequent bars 73, 74, 75 show results for the bearing surface with the larger flat pads, as in the second case 72, but where in each case the flat pads are damages with a pollution scratch, which bisects the flat pads at the position of the groove ends of the radial grooves. In the three cases 73, 74, 75, the length of the radial grooves increases monotonously: The third bar 73 shows the effect of the pollution scratch when the radial grooves have a length of approximately 60% of the distance from the inner diameter to the outer diameter, while the fourth 74 and fifth bars 75 correspond to radial groove lengths of approximately 73% and 86% respectively. This diagram shows therefore that the drop in thrust capacity is expected to be lower, the longer the radial grooves are relative to the distance from the inner diameter to the outer diameter.

Reference list:
- 1: thrust bearing
- 2: axial bore
- 21: axial groove
- 3: bearing surface
- 31: inner diameter
- 32: outer diameter
- 33: lower region
- 35: ramp region
- 4: radial groove
- 41: groove end (groove distal edge)
- 5: flat pad
- 6: lubrication oil channel

## Claims

1. A thrust bearing (1) for a bearing system of a turbocharger, having:
- an axial bore (2) designed to receive a shaft extending between a compressor wheel and a turbine wheel, and
- a bearing surface (3) extending in a plane substantially perpendicular to the axial bore (2) from an inner diameter (31) to an outer diameter (32) of the surface (3),
the surface (3) having multiple radial grooves (4), each extending from the inner diameter (31) outward in a radial direction towards the outer diameter (32) to a groove end (41) and being designed to supply lubrication oil to the surface (3), wherein the radial grooves (4) each extend for a fraction of more than 50% of the radial distance from the inner diameter (31) to the outer diameter (32) along the surface (3).

2. Thrust bearing (1) according to claim 1, wherein the radial grooves (4) each extend for a fraction of more than 60%, 75%, 80%, 90%, or 95% of the radial distance from the inner diameter (31) to the outer diameter (32) along the surface (3).

3. Thrust bearing (1) according to claim 1 or 2, wherein the surface (3) has between three and nine radial grooves (4), advantageously between four and eight grooves (4), more advantageously six radial grooves (4).

4. Thrust bearing (1) according to one of the previous claims, wherein each radial groove (4) is aligned at the inner diameter (31) with a corresponding axial groove (21) extending axially along an inner surface of the axial bore (2) and being in communication with a lubrication oil channel (6) entering the axial bore (2).

5. Thrust bearing (1) according to one of the previous claims, wherein the surface (3) is circumferentially profiled with a flat pad (5) associated with each radial groove (4) and a ramp region (35) rising circumferentially from the radial groove (4) to its associated upper flat pad (5).

6. Thrust bearing (1) according to claim 5, wherein each radial groove (4) is incorporated in a lower region (33) of the surface (3) circumferentially substantially adjacent to a neighboring flat pad (5).

7. Thrust bearing (1) according to one of the previous claims, wherein each radial groove (4) has a groove depth from the surface (3) that decreases radially from the inner diameter (31) to the groove end (41).

8. An integrated bearing system for a turbocharger comprising a housing with a bearing case, in which is placed a thrust bearing (1) according to one of the previous claims.

9. A turbocharger comprising a compressor, a turbine and an integrated bearing system according to one of the previous claims, further comprising a shaft extending between the compressor wheel and the turbine wheel and placed inside the axial bore (2) of the thrust bearing (1).
